Europäisches Patentamt

European Patent Office

Office européen des brevets

(11) Numéro de publication: **0 643 512 A1**

## (12) DEMANDE DE BREVET EUROPEEN

(21) Numéro de dépôt: **94202565.1**

(22) Date de dépôt: **07.09.94**

(51) Int. Cl.6: **H04L 7/02**

(30) Priorité: **13.09.93 FR 9310867**

(43) Date de publication de la demande:
**15.03.95 Bulletin 95/11**

(84) Etats contractants désignés:
**DE FR GB IT**

(71) Demandeur: **T.R.T. TELECOMMUNICATIONS RADIOELECTRIOUES ET TELEPHONIOUES**
**88, rue Brillat Savarin**
**F-75013 Paris (FR)**
(84) **FR**

(71) Demandeur: **PHILIPS ELECTRONICS N.V.**
**Groenewoudseweg 1**
**NL-5621 BA Eindhoven (NL)**
(84) **DE GB IT**

(72) Inventeur: **Lepitre, Didier**
**Société Civile S.P.I.D.,**
**156,Boulevard Haussmann**
**F-75008 Paris (FR)**
Inventeur: **Picart, Catherine**
**Société Civile S.P.I.D.,**
**156,Boulevard Haussmann**
**F-75008 Paris (FR)**

(74) Mandataire: **Chaffraix, Jean**
**Société Civile S.P.I.D.**
**156, Boulevard Haussmann**
**F-75008 Paris (FR)**

(54) **Dispositif de détection de perte de synchronisation trame pour modulations multidimensionnelles.**

(57) Le dispositif selon l'invention permet, pour les modulations numériques multidimensionnelles, de détecter toute perte de synchronisation trame, en surveillant que la valeur d'une variable représentant l'erreur de décodage par rapport à l'erreur due au bruit, ne dépasse pas un certain seuil sur un grand nombre de trames successives.

Cette variable $(V(s))$ est égale à une différence entre une valeur moyenne $(D(s))$ de l'erreur de décodage et une valeur moyenne $(E(s))$ de l'erreur due au bruit au $s^{ème}$ symbole.

Applications : modulations numériques, modems.

FIG.1

EP 0 643 512 A1

La présente invention concerne un système de transmission comprenant un émetteur pour émettre des trames composées de N symboles, par un canal à un récepteur, ce récepteur comprenant un dispositif de détection de perte de synchronisation.

L'invention concerne également un modem pour un tel système de transmission.

Dans le domaine de transmissions numériques les données sont souvent émises par trames de N symboles. C'est par exemple le cas pour les modulations codées en bloc ou en treillis pour lesquelles il est fréquent de n'ajouter qu'un seul élément binaire de redondance par trame afin de limiter l'accroissement de la constellation.

Un tel récepteur doit donc disposer d'une synchronisation trame lui permettant de reconnaître le début ou la fin de chaque trame pour différencier exactement les symboles qui y sont regroupés.

Un dispositif de synchronisation trame pour modulations codées en treillis est exposé dans le brevet US 4,641,327. Il nécessite de choisir la modulation utilisée de façon à interdire les transitions du codeur convolutif résultant d'une détection incorrecte du début des trames par le récepteur. L'existence d'une séquence interdite est ensuite détectée lorsque la différence entre une première grandeur dite métrique de chemin à l'instant t, et une seconde grandeur dite métrique de branche minimum pour la transition (t-1) à t, est différente de zéro.

Un tel dispositif n'est donc pas applicable à une modulation quelconque.

Le but de la présente invention est de proposer un dispositif qui détecte toute perte de synchronisation trame quelque soit la modulation utilisée, et sans émettre d'éléments binaires supplémentaires. A chaque détection, une nouvelle phase de synchronisation trame est alors relancée, ce qui permet de continuer à assurer une bonne qualité de réception.

Pour cela, un système de transmission de perte de synchronisation trame selon l'invention et tel que décrit dans le paragraphe introductif est caractérisé en ce qu'il comporte un module de surveillance d'une variable représentant une erreur de décodage par rapport à une erreur due au bruit de transmission, ce module de surveillance permettant de détecter une perte de synchronisation trame lorsque, sur un nombre prédéterminé de trames successives, cette variable dépasse une valeur seuil.

Dans un mode de réalisation particulièrement avantageux, lorsque les modulations sont codées en treillis, le dispositif selon l'invention comporte en outre :

- un module de calcul d'une valeur moyenne de l'erreur due au bruit, cette erreur étant égale à la distance qui le sépare du point de la constellation dont il est le plus proche,
- un module de calcul d'une valeur moyenne de l'erreur de décodage fournie par un algorithme de décodage, cette erreur étant égale à la distance séparant le point reçu du point décodé par ledit algorithme.

Ce mode de réalisation présente l'avantage, en calculant une valeur moyenne des erreurs données par l'algorithme de décodage, d'utiliser les éléments binaires redondants introduits par le codage convolutif pour détecter la perte de synchronisation trame.

Dans un autre mode de réalisation avantageux, le dispositif selon l'invention comporte en outre un module de calcul de la variable à surveiller, qui est donnée par une expression du type:

$$V(s) = D(s) - N.E(s)$$

où $D(s)$ et $E(s)$ sont respectivement les valeurs moyennes de l'erreur de décodage et de l'erreur due au bruit calculées au $s^{ème}$ symbole, et $N$ est un entier naturel.

Cette variable $V(s)$ présente l'intérêt de ne pas dépendre du bruit, ce qui permet de la comparer à un seuil fixé pour déterminer s'il y a perte de synchronisation trame.

D'autres particularités, détails et avantages de la présente invention seront mis en évidence par la description qui va suivre en regard des dessins annexés qui sont donnés à titre d'exemples non limitatifs, dans lesquels :

- la figure 1 représente un exemple de dispositif de détection de perte de synchronisation trame selon l'invention,
- la figure 2 représente un exemple d'organigramme de fonctionnement d'un module de surveillance d'un dispositif selon l'invention,
- la figure 3 représente un système de transmission comportant deux modems selon l'invention.

Dans la suite de la description on se placera dans le cas de modulations multidimensionnelles codées en treillis, ce qui correspond au cas le plus largement utilisé actuellement. Il semble donc nécessaire d'en rappeler brièvement le principe.

Les modulations codées en treillis sont basées sur la décomposition de la constellation en sous-ensembles : ces sous-ensembles sont choisis de telle sorte que la distance euclidienne carrée minimum séparant deux points d'un même sous-ensemble soit maximale. Il est donc possible de diviser plusieurs fois la constellation jusqu'à obtenir la distance souhaitée.

Ainsi, pour transmettre Q éléments binaires d'information, on ajoute P éléments binaires de redondance utilisant donc une constellation de $2^{Q+P}$ points (dans la pratique P est en général fixé égal à 1) : M des Q éléments binaires d'information sont alors utilisés par un codeur convolutif de taux M/M + P (ce qui correspond à l'ajout de P éléments binaires de redondance) pour désigner l'un des $2^{M+P}$ sous-ensembles de la constellation; et les Q-M éléments binaires restant servent à déterminer, à l'intérieur d'un sous-ensemble désigné, l'un des $2^{Q-M}$ points.

Le comportement d'un codeur convolutif est décrit par un treillis : la transmission d'une trame correspond à la transition d'un état initial à un état final le long du treillis.

L'algorithme de Viterbi est connu pour être une méthode optimale de décodage de ces codes convolutifs. Son principe est décrit dans l'article "The Viterbi Algorithm" de G. David Forney paru le 3 mars 1973 dans la revue "Proceedings of the IEEE". Succinctement on peut rappeler qu'il comporte les étapes suivantes :

- Pour chacun des N symboles d'une trame reçue, il faut déterminer le symbole qui en est le plus proche dans chaque sous-ensemble de la constellation bidimensionnelle. Les y.N distances ainsi obtenues (y étant le nombre de sous-ensembles de la constellation, lié à la partition utilisée) sont alors combinées entre elles pour former des métriques de branches, associées à ladite trame et correspondant aux transitions possibles entre deux états (état initial et état final) du treillis.
- Puis, à chaque état final est associé une métrique de chemin. Le treillis définit les z états initiaux dont peut être issu cet état final : il s'agit alors de calculer les z grandeurs formées par la somme de la métrique de chemin associée à chacun de ces états initiaux et de la métrique de branche associée à la transition état initial-état final correspondante. La métrique de chemin associée à l'état final est égale à la plus faible de ces z grandeurs (qui correspond au plus court chemin le long du treillis). Cette opération consiste donc à sélectionner pour chaque état final l'état initial dont il est le plus probablement issu.

Dans la suite de la description, c'est cet algorithme de Viterbi qui est utilisé comme algorithme de décodage. Toutefois d'autres algorithmes sous-optimaux sont utilisables.

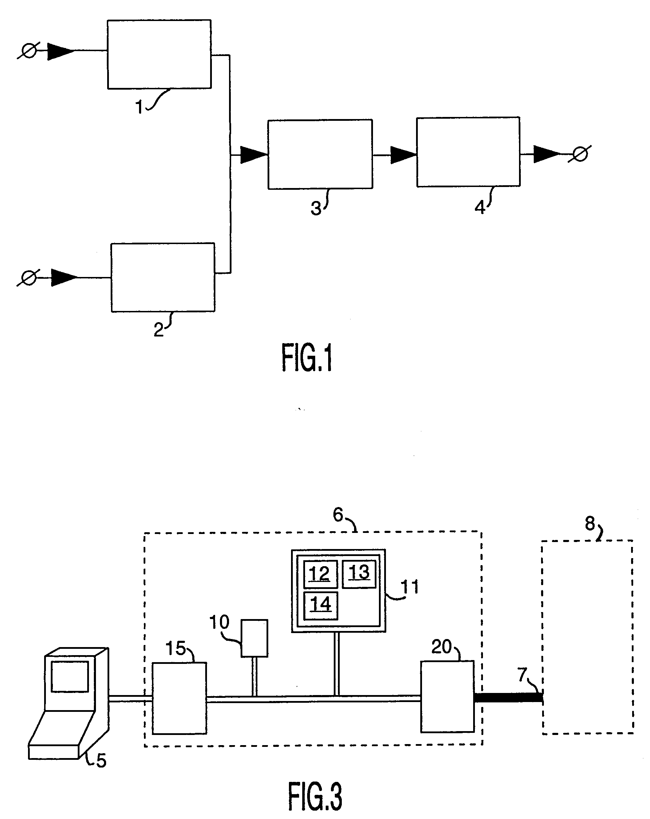

D'après la figure 1, un dispositif de détection de perte de synchronisation trame selon l'invention comporte un module 1 de calcul d'une valeur moyenne de l'erreur due au bruit, un module 2 de calcul d'une valeur moyenne de l'erreur de décodage, un module 3 de calcul de la variable à surveiller qui représente l'erreur de décodage par rapport à l'erreur due au bruit, et enfin un module 4 de surveillance de la valeur de cette variable.

Le module 1 permet de calculer une valeur moyenne E(s) au $s^{\text{ème}}$ symbole de l'erreur due au bruit, à l'aide, par exemple, de la formule de la moyenne donnée ci-dessous :

$$E(s) = (1-\lambda).E(s-1) + \lambda.e(s)$$

où :
- E(s) et E(s-1) sont respectivement les valeurs moyennes aux $s^{\text{ème}}$ et $(s-1)^{\text{ème}}$ symboles de l'erreur due au bruit,
- $\lambda$ est un coefficient très faible devant 1, égal par exemple à $2^{-8}$,
- e(s) est l'erreur due au bruit pour le symbole s; elle est choisie égale à la distance qui sépare le symbole reçu s du point de la constellation qui en est le plus proche, et elle est fournie en entrée au module 1.

Cette valeur moyenne E(s) de l'erreur due au bruit est mise à jour par le module 1 pour chaque nouveau symbole reçu.

Le module 2 permet de calculer une valeur moyenne D(t) à la $t^{\text{ème}}$ trame de l'erreur de décodage, à l'aide, par exemple de la formule donnée ci-dessous :

$$D(t) = (1 - \mu).D(t-1) + \mu.d(t)$$

où :
- D(t) et D(t-1) sont respectivement les valeurs moyennes à la $t^{\text{ème}}$ et à la $(t-1)^{\text{ème}}$ trame de l'erreur de décodage,
- $\mu$ est un coefficient très faible devant 1, choisi de préférence égal à $\lambda$,
- et d(t) est l'erreur de décodage pour la trame t; elle est choisie, dans un mode de réalisation particulièrement avantageux du dispositif selon l'invention, égale à la métrique de branche qui est associée à la trame t le long du plus court chemin déterminé par l'algorithme de Viterbi, et elle est fournie en entrée au module 2.

Cette valeur moyenne D(t) de l'erreur de décodage est mise à jour par le module 2 pour chaque nouvelle trame reçue.

Le module 3 permet de calculer la variable V(t) à surveiller qui représente l'erreur de décodage par rapport à l'erreur due au bruit. Cette variable V(t) est mise à jour de manière avantageuse à partir de la formule suivante pour chaque trame t :

$$V(t) = D(t) - N.E(s_t)$$

où $s_t$ est le dernier symbole de la trame t.

Le facteur N permet de prendre en compte la différence de dimension entre $E(s_t)$ qui est une distance, et D(t) qui, étant égale à une métrique de branche, correspond à la somme de N distances.

Le module 4 permet de surveiller la valeur de cette variable V(t) tous les N symboles, et détecte une perte de synchronisation trame lorsque, sur un grand nombre de trames successives, la valeur de V(t) dépasse un seuil fixé.

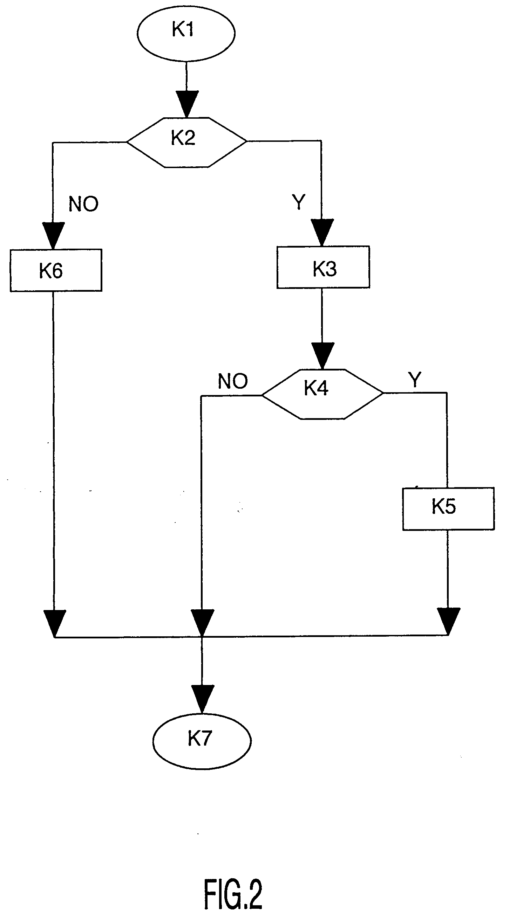

La figure 2 donne un exemple d'algorithme de fonctionnement du module 4 qui est activé pour chaque trame t décodée. La signification des différentes cases de cet organigramme est donnée ci-dessous dans l'ordre d'exécution :

- case K1 : Cette case représente le début de l'algorithme.
- case K2 : Le module de surveillance teste si la variable V(t) est supérieure à un seuil S fixé. Ce seuil S est déterminé d'après la formule suivante, en fonction de l'unité U choisie pour coder la constellation :

$$S = U^2/a$$

où a est une grandeur réelle de préférence égale ou proche de 2. Si V(t)>S, le module de surveillance suit la branche "Y" de l'organigramme et exécute la case K3, sinon, il suit la branche "NO" et exécute la case K6.
- case K3 : Une variable, appelée compteur est incrémentée d'une unité. Ce compteur, qui est ainsi incrémenté d'une unité lorsque, pour une trame t, une perte de synchronisation trame a été détectée, permet dans la suite de l'algorithme (case K4) de vérifier si cette perte a été confirmée sur un nombre suffisant de trames avant de relancer une synchronisation trame.
- case K4 : La valeur de la variable compteur est comparée à une borne B qui est fixée égale à quelques milliers de trames de façon à correspondre à une durée de surveillance de quelques secondes. (Cette borne B doit être fixée en fonction des coefficients λ et μ qui représentent l'inverse des durées d'intégration pour le calcul des valeurs moyennes E(s) et D(t). Ainsi la durée de surveillance doit être largement supérieure aux durées d'intégration.) Si la variable compteur dépasse la borne B, le module de surveillance suit la branche "Y" de l' organigramme et passe à la case K5. Sinon, il suit la branche "NO" et passe à la case K7.
- case K5 : le module de surveillance relance une phase de synchronisation trame.
- case K6 : La variable compteur est remise à zéro.
- case K7 : Fin de l'algorithme.

Dans un mode de réalisation particulièrement avantageux, le dispositif selon l'invention comporte un ensemble à microprocesseur 11 comprenant un microprocesseur proprement dit 12, une mémoire de travail 13 et une mémoire morte 14 contenant des instructions nécessaires à la mise en oeuvre du dispositif de détection de perte de synchronisation trame tel que décrit ci-dessus.

Les modems haut débits qui utilisent des modulations multidimensionnelles constituent une application particulièrement intéressante du dispositif de détection de perte de synchronisation trame selon l'invention.

Sur la figure 3, un tel modem, qui porte la référence 6, permet de connecter un terminal numérique 5 à un même terminal par un canal constitué d'une ligne téléphonique 7 et d'un modem 8. Ce modem comporte des ensembles à microprocesseurs 10 et 11, un premier circuit d'interface 15 qui permet de le relier au terminal 5, et un second circuit d'interface 20 qui permet de transformer les signaux en provenance de la ligne téléphonique 7 en signaux numériques et réciproquement. Ce circuit d'interface 20 est décrit dans le brevet européen n°0318105.

L'ensemble à microprocesseur 10 est affecté à la gestion du modem, et l'ensemble 11 qui assure les opérations de transmission, comporte un microprocesseur 12, une mémoire vive de travail 13 et une mémoire morte contenant en outre les instructions permettant de mettre en oeuvre le dispositif selon l'invention.

Il va de soi que des modifications peuvent être apportées aux modes de réalisation qui viennent d'être décrits, notamment par substitution de moyen techniques équivalents, sans que l'on sorte pour cela du cadre de la présente invention.

## Revendications

1. Système de transmission comprenant un émetteur (6) pour émettre des trames composées de N symboles, par un canal (7) à un récepteur (8), ce récepteur comprenant un dispositif de détection de perte de synchronisation caractérisé en ce que le dispositif de détection de perte de synchronisation comporte un module de surveillance (4) d'une variable représentant une erreur de décodage par rapport à une erreur due au bruit de transmission, ce module de surveillance (4) permettant de détecter une perte de synchronisation trame lorsque, sur un nombre prédéterminé de trames successives, cette variable dépasse une valeur seuil.

2. Système de transmission selon la revendication 1, caractérisé en ce que le système de transmission est conçu pour modulations à 2N dimensions, chacun des symboles correspondant à un point d'une constellation bidimensionnelle.

**3.** Système de transmission selon la revendication 1 ou 2, caractérisé en ce qu'il comporte en outre :
- un module (1) de calcul d'une valeur moyenne de l'erreur due au bruit, cette erreur étant égale, pour chaque symbole reçu, à la distance qui le sépare du point de la constellation dont il est le plus proche,
- un module (2) de calcul d'une valeur moyenne de l'erreur de décodage fournie par un algorithme de décodage, cette erreur étant égale à la distance séparant le point reçu du point décodé par ledit algorithme.

**4.** Système selon l'une des revendications 1 à 3, caractérisé en ce qu'il comporte en outre un module (3) de calcul de la variable à surveiller, qui est donnée par une expression du type

$$V(s) = D(s) - N.E(s)$$

où $D(s)$ et $E(s)$ sont respectivement les valeurs moyennes de l'erreur de décodage et de l'erreur due au bruit calculées au $s^{ème}$ symbole, et $N$ est un entier naturel.

**5.** Système selon l'une des revendications 1 à 4 caractérisé en ce que la valeur moyenne des erreurs dues au bruit est calculée à partir d'une expression du type :

$$E(s) = (1-\lambda).E(s-1) + \lambda.e(s)$$

où :
- $E(s)$ et $E(s-1)$ sont respectivement les valeurs moyennes des erreurs dues au bruit aux $s^{ème}$ et $(s-1)^{ème}$ symboles,
- $e(s)$ désigne l'erreur due au bruit pour le $s^{ème}$ symbole,
- $\lambda$ est un coefficient très faible devant 1.

**6.** Dispositif selon l'une des revendications 1 à 5, caractérisé en ce que la valeur moyenne des erreurs de décodage est calculée à partir d'une expression du type :

$$D(s) = (1-\mu).D(s-1) + \mu.d(s)$$

où :
- $D(s)$ et $D(s-1)$ sont respectivement les valeurs moyennes des erreurs de décodage aux $s^{ème}$ et $(s-1)^{ème}$ symboles,
- $d(s)$ désigne l'erreur de décodage pour le $s^{ème}$ symbole,
- $\mu$ est un coefficient très faible devant 1 .

**7.** Dispositif selon l'une des revendications 1 à 6, caractérisé en ce que la valeur du seuil est donnée par une expression du type :

$$S = U^2/a$$

où $U$ est la valeur unité utilisée pour coder la constellation, et $a$ est une valeur proche de 2.

**8.** Système selon l'une des revendications 1 à 7, caractérisé en ce qu'avant de décider qu'il y a perte de synchronisation trame, la surveillance a lieu sur une durée comprise entre quelques secondes et une dizaine de secondes.

**9.** Modem (8) destiné à recevoir des trames composées de N symboles et comprenant un dispositif de détection de perte de synchronisation caractérisé en ce que le dispositif de détection de perte de synchronisation comporte un module de surveillance (4) d'une variable représentant un erreur de décodage par rapport à une erreur due au bruit de transmission, ce module de surveillance (4) permettant de détecter une perte de synchronisation trame lorsque, sur un nombre prédéterminé de trames successives, cette variable dépasse une valeur seuil.

**10.** Modem selon la revendication 9, caractérisé en ce que le système de transmission est conçu pour modulations à 2N dimensions, chacun des symboles correspondant à un point d'une constellation bidimensionnelle.

FIG.1

FIG.3

FIG.2

7

Office européen
des brevets

**RAPPORT DE RECHERCHE EUROPEENNE**

Numero de la demande

EP 94 20 2565

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE International Conference on Communications 1993, 23-26 Mai 1993, Génève, CH; IEEE, New York, 1993; pages 821-825, Darnell et al.: "A novel DSP-based data synchronisation technique" * abrégé * * page 823, colonne de gauche, alinéa 2 * --- | 1,2,9,10 | H04L7/02 |
| A,D | EP-A-0 208 537 (CODEX) * abrégé; figure 7 * ----- | 1,2,9,10 | |

DOMAINES TECHNIQUES RECHERCHES (Int.Cl.6)

H04L

Le présent rapport a été établi pour toutes les revendications

| Lieu de la recherche | Date d'achèvement de la recherche | Examinateur |
|---|---|---|
| LA HAYE | 14 Décembre 1994 | Scriven, P |